# EUROPÄISCHE PATENTSCHRIFT

(11) **EP 1 410 868 B1**
(45) Veröffentlichungstag und Bekanntmachung des Hinweises auf die Patenterteilung: **21.10.2009**
(21) Anmeldenummer: 03017244.9
(22) Anmeldetag: 15.11.2000
(51) Int. Cl.: B23K 9/133

(54) **Schweissdrahtfördereinrichtung mit Haupt- und Hilfsantrieb**
Welding wire feed arrangement with main and auxiliary drive
Dispositif d'alimentation en fil de soudage avec entraînement principal et auxilliaire

(30) Priorität: 19.11.1999 AT 196899
(43) Veröffentlichungstag der Anmeldung: 21.04.2004
(62) Teilanmeldung aus: 00978926.4
(73) Patentinhaber: Fronius International GmbH, 4643 Pettenbach (AT)
(72) Erfinder: Artelsmair, Josef, 4552 Wartberg/Krems (AT); Brunner, Michael, 8055 Seiersberg (AT); Mörtendorfer, Bernhard, 4551 Ried im Traunkreis (AT)
(74) Vertreter: Burger, Hannes

(56) Entgegenhaltungen:
- DE-A- 4 320 405
- DE-A- 19 732 379
- US-A- 1 927 896
- PATENT ABSTRACTS OF JAPAN Bd. 1997, Nr. 03, 31. März 1997 (1997-03-31) & JP 8 309536 A (BABCOCK HITACHI KK), 26. November 1996 (1996-11-26)

## Beschreibung

Die Erfindung betrifft eine Vorrichtung zum Fördern von Schweißdraht von einem Drahtvorrat zu einem Schweißbrenner, wie diese im Oberbegriff des Anspruches 1 beschrieben ist.

Aus der DE 197 32 379 C2 sind ein Verfahren und eine Vorrichtung zum Fördern von Schweißdraht bekannt, wobei die Drahtförderung durch mindestens zwei Antriebe (einen ziehenden Hauptantrieb und einen schiebenden Hilfsantrieb) und die Drahtführung durch einen unter Umständen mehrfach gehalterten Drahtförderschlauch bewerkstelligt wird. Der drehzahlgeregelte Hauptantrieb führt den Draht einem Schweißbrenner zu, während der Hilfsantrieb unter Zugriff auf eine aufwendige Meß- und Regeleinrichtung einerseits Gleichlaufunterschiede von Haupt- und Hilfsantrieb ausgleicht und andererseits während des Schweißbetriebes auftretende Schubkraftschwankungen ausregelt. Zu diesem Zweck ist die Regelung des Hilfsantriebes als Kaskadenregelung, im Detail als Drehzahlregelung mit überlagerter Kraftregelung, ausgelegt. Als Sensor der Kraftregelung dient ein beispielsweise mechanisch vorgespanntes, zwischen dem Elektromotor und dem Antriebselement des Hilfsantriebes angeordnetes, elastisch verformbares Element (z.B. eine Schraubenfeder oder Flachspiralfeder), welches durch die Schubkraftschwankungen auf Torsion beansprucht wird. Die an diesem elastischen Element durch die Messeinrichtung bzw. den Sensor durch Erfassung des Verdrehwinkels gemessene Kraft wird der erwähnten Kaskadenregelung als Kraft-Istwert zugeführt, welche über die unterlagerte Drehzahlregelung die Drehzahl des Elektromotors des Hilfsantriebes so regelt, dass die Differenz zwischen diesem Kraft-Istwert und einem vorgegebenen Kraft-Sollwert verschwindet.

Nachteilig ist hierbei, dass das elastisch verformbare Element mit dem Antriebsmotor gekoppelt ist, sodass eine direkte Beeinflussung der Drehbewegung auf das Element vorhanden ist.

Weiters ist aus der DE 43 20 405 A1 eine Vorrichtung gemäß dem Oberbegriff des Anspruchs 1 zur schlupffreien Förderung von Draht, insbesondere von drahtförmigem Zusatzwerkstoff zur Durchführung von Schweißprozessen, bekannt, wobei die Vorrichtung eine Drahtvorratseinheit, ein Drahtreservoir, eine Drahtzufuhreinheit und eine Steuerungseinheit als Grobbaugruppen umfasst. Die Steuerungseinheit beinhaltet sämtliche für die Steuerung, Regelung und Überwachung der beiden offenbarten Förderantriebe und zur Auswertung der Informationen der Mengensensorik erforderlichen Bauelemente. Der Draht wird von einer Drahtvorratsrolle der Drahtvorratseinheit unter der Zugkraft eines drehzahlgeregelten Abhaspelmotors (Hilfsantrieb) abgerollt, durch zwei zueinander senkrecht angeordnete, die Bildung einer symmetrischen Drahtschlaufe unterstützende Führungskanäle der Drahtführungseinrichtung im Drahtreservoir geführt und danach der Drahtzufuhreinheit zugeleitet. Der in der Drahtzufuhreinheit angeordnete (Haupt-)Antrieb fördert den Draht direkt an die Schweißstelle. Dabei wird die durch die Drahtschlaufe z.B. in mittlerer Schlaufenweite geregelt bereitgehaltene Drahtmenge dazu verwendet, um den Haupt- und Hilfsantrieb kräftemäßig zu entkoppeln. Die durch die Drahtschlaufe bereitgehaltene Drahtmenge wird durch eine Mengensensorik überwacht, die z.B. optoelektronisch als eine entlang der Symmetrieachse der Drahtschlaufe angeordnete Reihe von Lichtschranken ausgebildet sein kann und welche ihre Meßsignale der Steuerungseinheit zuliefert. Neben den Antriebsrollen von Haupt- und Hilfsantrieb sowie der Drahtführungseinrichtung gibt es keine weiteren Führungselemente, die der Drahtführung dienen. Insbesondere wird ein Drahtführungsschlauch zur Vermeidung von Reibungsverlusten ausdrücklich ausgeschlossen.

Nachteilig ist hierbei, dass durch eine Anordnung einer derartigen Drahtspeichereinheit, in der der Schweißdraht eine Drahtschlaufe ausbildet, ein erheblicher Platzaufwand notwendig ist.

Aus der US 1,927,896 A ist eine Vorrichtung zum Fördern eines Schweißdrahtes von einem Drahtvorrat zu einem Schweißbrenner bekannt, bei der wiederum dem Schweißbrenner und dem Drahtvorrat eine Schweißdrahtfördervorrichtung zugeordnet ist. Dabei wird der Schweißdraht in einer gekrümmten Bahn vom Drahtvorrat zum Schweißbrenner befördert. Hierzu wird das Krümmungsverhalten über eine federgetragene Rolle, die unmittelbar an dem Schweißdraht anliegt, gemessen. Nimmt die Spannung des Schweißdrahtes zu, so wird die Rolle nach unten abgelenkt, wodurch ein an der Rolle befestigter Kontaktarm bzw. Hebel einen regelbaren Widerstand verändert. Dieser Widerstand ist mit der Schweißdrahtfördervorrichtung für den Drahtvorrat gekoppelt, wodurch eine Regelung aufgrund des Krümmungsverhaltens des Schweißdrahtes vorgenommen wird.

Nachteilig ist hierbei, dass bereits Schwankungen in der Zufuhr zu dem Schweißbrenner Auswirkungen auf den Regelkreis haben und somit nur ein Einsatz in fix montierte Schweißanlagen ohne Veränderung der Schweißbrennerstellung möglich ist.

In der JP 08309536 A ist eine Schweißanlage gezeigt, bei der der Schweißdraht über ein Schlauchpaket einem Schweißbrenner zugeführt wird.

Der Erfindung liegt die Aufgabe zugrunde, eine Vorrichtung zum Fördern von Schweißdraht von einem Drahtvorrat zu einem Schweißbrenner zu schaffen, mit dem eine schlupffreie Förderung des Schweißdrahtes möglich ist und eine sichere und einfache Regelung für mehrere in einer Schweißanlage eingesetzte Schweißdrahtfördervorrichtungen erreicht werden kann.

Die Aufgabe der Erfindung wird durch die Merkmale im Kennzeichenteil des Anspruches 1 gelöst. Vorteilhaft ist hierbei, dass durch einen derartigen Drahtspeicher entsprechende Förderbewegungen des Schweißdrahtes von dem Drahtspeicher aufgenommen bzw. abgefangen werden und somit eine einfache Regelung bzw. Steuerung der Schweißdrahtfördervorrichtung möglich ist.

Weitere vorteilhafte Ausgestaltungen sind in den Ansprüchen 2 bis 8 beschrieben. Die sich daraus ergebenden Vorteile sind aus der Beschreibung zu entnehmen.

Außerdem ist bei der durch die Ansprüche 1 bis 8 charakterisierten Erfindung vorteilhaft, dass durch ein derartiges Drahtfördersystem spezielle Drahtförderungen, wie beispielsweise eine pulsförmige Drahtzuführung zum Schweißbrenner oder eine Vorwärts- und Rückwärtsförderung des Schweißdrahtes, durchgeführt werden können, wobei sich die Förderkraft bzw. der Förderdruck auf die Eigensteifigkeit des Schweißdrahtes selbständig einstellt.

Die Erfindung wird anschließend durch Ausführungsbeispiele näher beschrieben.

Es zeigen:
- Fig. 1: eine schematische Darstellung einer Schweißmaschine bzw. eines Schweißge- rätes;
- Fig. 2: ein Übersichtsbild einer Vorrichtung zum Fördern von Schweißdraht, in ver- einfachter, schematischer Darstellung;
- Fig. 3: eine vergrößerte Darstellung eines Sensors einer Vorrichtung zum Fördern von Schweißdraht zur Aufnahme eines Förderdruckes des Schweißdrahtes nach Fig. 1, in vereinfachter, schematischer Darstellung;
- Fig. 4: ein weiteres Ausführungsbeispiel für einen Sensor einer Vorrichtung zum Fördern von Schweißdraht zur Aufnahme des Förderdruckes des Schweiß- drahtes, in vereinfachter, schematischer Darstellung;
- Fig. 5: ein anderes Ausführungsbeispiel für einen Sensor einer Vorrichtung zum För- dern von Schweißdraht zur Aufnahme des Förderdruckes des Schweißdrahtes, in vereinfachter, schematischer Darstellung;
- Fig. 6: eine Ansicht gemäß Pfeil VI in Fig. 5 des Sensors zur Aufnahme des Förder- druckes des Schweißdrahtes, in vereinfachter, schematischer Darstellung:
- Fig. 7: eine Darstellung einer erfindungsgemäßen Drahtspeichervorrichtung mit einem Erfassungsmittel zur Erfassung eines Krümmungsverhaltens des Schweißdrahtes, in vereinfachter, schematischer Darstellung;
- Fig. 8: ein erfindungsgemäßes Ausführungsbeispiel mit der Drahtspeichervorrichtung und dem Sensor zur Aufnahme des Förderdruckes, in vereinfachter, schemati- scher Darstellung.

Einführend wird festgehalten, dass gleiche Teile der einzelnen Ausführungsbeispiele mit gleichen Bezugszeichen versehen werden. Die in den einzelnen Ausführungsbeispielen angegebenen Lageangaben sind bei einer Lageänderung sinngemäß auf die neue Lage zu übertragen.

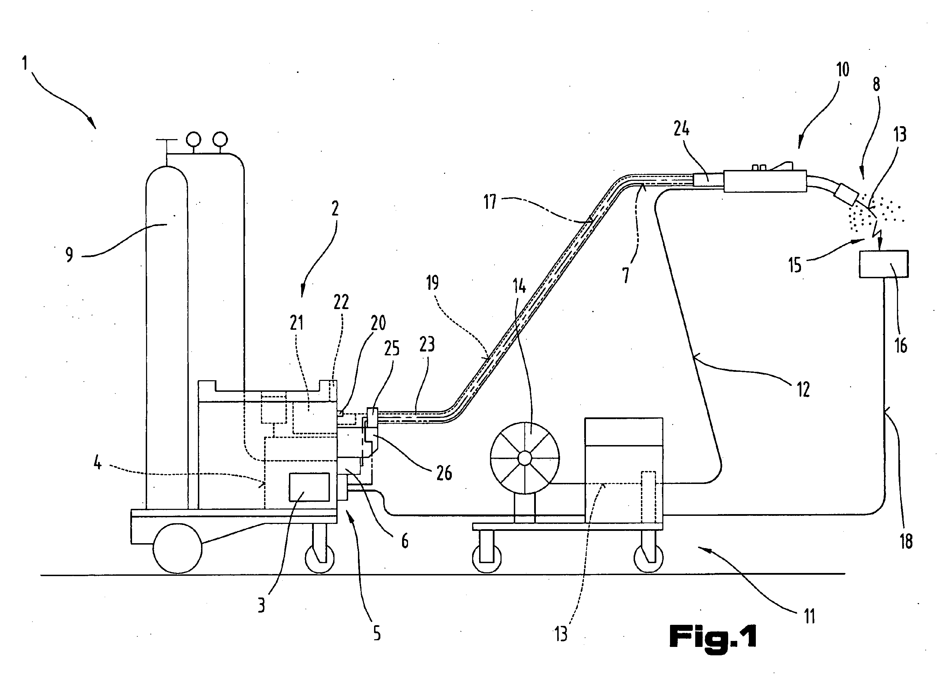

Nachfolgend wird in Fig. 1 ein Ausführungsbeispiel beschrieben, bei welchem es sich nicht um ein Ausführungsbeispiel der Erfindung handelt, dieses jedoch das Verständnis der Erfindung erleichtert.

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, dass die erfindungsgemäße Lösung bei einer Stromquelle bzw. einer Schweißstromquelle eingesetzt werden kann.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einem Drahtvorrat 14 in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

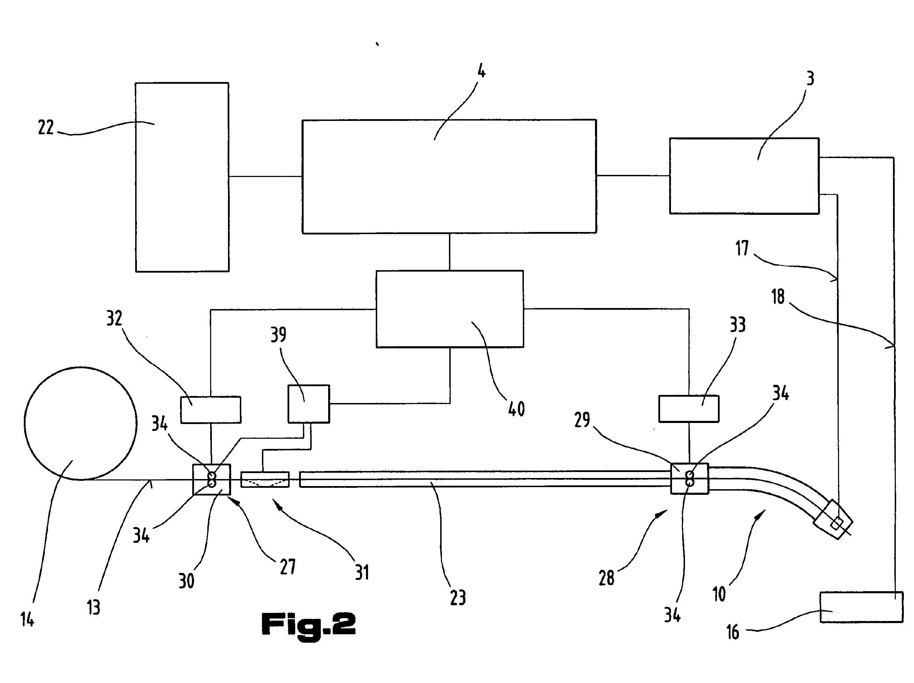

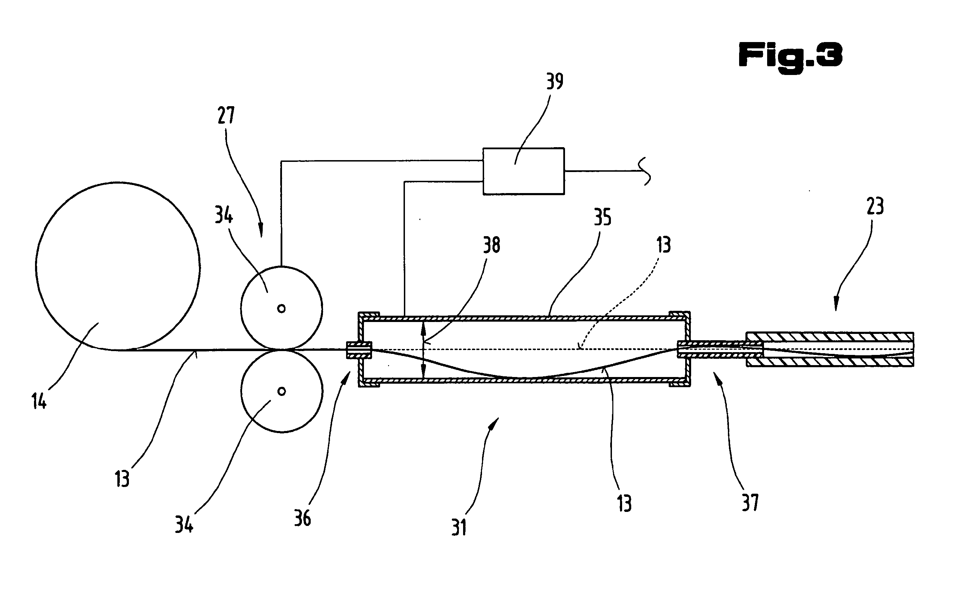

In den Fig. 2 und 3 ist eine Vorrichtung zum Fördern von Schweißdraht 13 von einem Drahtvorrat 14 zu dem Schweißbrenner 10 mit zumindest einer Schweißdrahtfördervorrichtung 27 und einer weiteren Schweißdrahtfördervorrichtung 28, zum Aufbau einer Förderkraft, insbesondere einem Hauptantrieb 29 und einem Hilfsantrieb 30, dargestellt, wobei in der Drahtzuführung eine zwischen den Schweißdrahtfördervorrichtungen 27, 28 auftretende Förderkraft bzw. eine Druckkraft im Schweißdraht 13 über ein Erfassungsmittel, insbesondere einem Rohrsensor 31, erfasst wird. In Abhängigkeit von einem Ausmaß einer Querbewegung des Schweißdrahtes 13 wird die Förderkraft und/oder - geschwindigkeit zumindest der Schweißdrahtfördervorrichtung 27 und der weiteren Schweißdrahtfördervorrichtung 28, verändert. Das Ausmaß der Querbewegung des Schweißdrahtes 13 kann durch einen Soll-/ Istvergleich festgestellt werden, wobei der Sollwert als Wert innerhalb jenes Bereiches festgelegt wird, in dem das Erfassungsmittel kein Signal detektiert. Der Hauptantrieb 29 ist am Schweißbrenner 10 bzw. im Bereich des Schweißbrenners 10 angeordnet und der Hilfsantrieb 30 dem Drahtvorrat 14 bzw. im Bereich des Drahtvorrates 14 angeordnet bzw. zugeordnet.

Die Drahtförderung von dem Drahtvorrat 14 zu dem Schweißbrenner 10 erfolgt über das Schlauchpaket 23 oder einer Führungsvorrichtung, insbesondere einer in dem Schlauchpaket 23 oder der Führungsvorrichtung angeordneten Seele. Dem Schweißdraht 13 ist dabei zur Ermittlung einer Kraftschwankung bzw. einer Förderkraft oder einer Druckkraft des Schweißdrahtes der Rohrsensor 31 zugeordnet. Dieser ist dabei zwischen den Schweißdrahtfördervorrichtungen 27, 28, insbesondere dem Hauptantrieb und dem Hilfsantrieb, angeordnet. Die Schweißdrahtfördervorrichtung 27, 28, insbesondere der Hauptantrieb 29 und der Hilfsantrieb 30, sind aus einem Antriebsmotor 32, 33, wie schematisch dargestellt, und einem oder mehreren auf den Schweißdraht 13 einwirkende Antriebselementen 34, insbesondere Antriebsrollen, gebildet.

Der Sensor, insbesondere der Rohrsensor 31, ist in Längsrichtung des Schweißdrahtes 13, also in der Schweißdrahtförderrichtung, angeordnet bzw. dem Schweißdraht 13 zugeordnet. Der Rohrsensor 31 ist durch ein Gehäuse 35, insbesondere durch ein Rohr bzw. ein rohrförmiges Element, und einer Drahteinlaufführung 36 sowie einer Drahtauslaufführung 37 gebildet, wobei die Drahteinlaufführung 36 und die Drahtauslaufführung 37 aus einem nicht elektrisch leitenden Material gebildet sind. Der Rohrsensor 31 hingegen ist aus einem elektrisch leitenden Material gebildet und weist einen Innendurchmesser 38 des Rohres auf, der größer ist als ein Außendurchmesser des Schweißdrahtes 13.

Weiters ist der Rohrsensor 31 bzw. das Gehäuse 35 bzw. das Rohr des Rohrsensors 31 mit einer Detektoreinheit 39 verbunden. Die Detektoreinheit 39 ist wiederum mit einer Schweißdrahtfördervorrichtung 27, insbesondere mit dem Hilfsantrieb 30, bevorzugt mit dem Antriebselement 34, elektrisch leitend verbunden. Die Detektoreinheit 39 ist weiters mit einer für die Schweißdrahtfördervorrichtung 27 und die weitere Schweißdrahtfördervorrichtung 28, erforderlichen Drehzahlreglereinheit 40 verbunden, wobei einer der Antriebsmotoren 32, 33, welche mit der Drehzahlreglereinheit 40 verbunden sind, in Abhängigkeit der Detektoreinheit 39 angesteuert wird, d.h., dass die Schweißdrahtfördervorrichtung 27 oder die weitere Schweißdrahtfördervorrichtung 28, auf einer konstanten Drehzahl gehalten wird und die Drehzahl der anderen Schweißdrahtfördervorrichtung 27 oder 28 aufgrund eines Signals von der Detektoreinheit 39 geregelt wird.

Weiters ist die Drehzahlreglereinheit 40 mit der Steuervorrichtung 4 verbunden, sodass ein Benutzer bzw. Schweißer über die Ein- und/oder Ausgabevorrichtung 22, welche schematisch dargestellt ist, eine Drahtvorschubgeschwindigkeit einstellen kann und somit von der Steuervorrichtung 4 entsprechende Sollwerte an die Drehzahlreglereinheit 40 übersenden kann. Die Regelung bzw. Steuerung erfolgt anschließend von der Drehzahlreglereinheit 40 unabhängig von der Steuervorrichtung 4 des Schweißgerätes 1. Damit ein Schweißprozess mit dem schematisch dargestellten Aufbau durchgeführt werden kann, ist die Steuervorrichtung 4 mit dem Leistungsteil 3 verbunden. Das Leistungsteil 3 ist weiters über die Schweißleitungen 17, 18 mit dem Schweißbrenner 10 bzw. über eine Kontaktbuchse mit dem Schweißdraht 13 und dem Werkstück 16 verbunden, wodurch der Lichtbogen 15 zwischen dem Schweißdraht 13 und dem Werkstück 16 aufgebaut werden kann.

Damit bei einem gestarteten Schweißprozess, also bei einer Förderung des Schweißdrahtes 13 von dem Drahtvorrat 14 zum Schweißbrenner 10 und einem gezündeten Lichtbogen 15, ein Auslenken oder ansatzweises Auslenken des Schweißdrahtes 13 aufgrund der Förderkraft bzw. Druckkraft auf den Schweißdraht zwischen den Schweißdrahtfördervorrichtungen 27, 28, insbesondere zwischen dem Hauptantrieb 29 und dem Hilfsantrieb 30, erfasst wird und dieses Auslenken als Information für die Regelung zumindest einer der Schweißdrahtfördervorrichtung 27, 28 verwendet wird, ist zwischen dem Hauptantrieb 29 und dem Hilfsantrieb 30 der Sensor, insbesondere der Rohrsensor 31, angeordnet.

Bei Aktivieren eines Schweißprozesses wird an die Schweißdrahtfördervorrichtungen 27, 28 von der Drehzahlreglereinheit 40 ein entsprechendes Signal für eine Drehzahl, die für eine bestimmte voreingestellte Drahtfördergeschwindigkeit benötigt wird, übersandt. Dabei wird der Hauptantrieb 29 derartig von der Drehzahlreglereinheit 40 geregelt, dass sich eine konstante Drahtfördergeschwindigkeit einstellt. Der Hilfsantrieb 30 wird hingegen in Abhängigkeit des Hauptantriebes 29 geregelt, wobei am Beginn eines Schweißprozesses die von dem Hilfsantrieb 30 erzeugte Drahtfördergeschwindigkeit höher ist als die des Hauptantriebes 29. Durch die unterschiedliche Regelung der beiden Schweißdrahtfördervorrichtungen 27, 28 baut sich zwischen diesen eine entsprechende Förderkraft bzw. eine entsprechende Druckkraft auf den Schweißdraht 13 auf.

Die Erfassung der Förderkraft bzw. der Druckkraft erfolgt von dem Sensor, insbesondere dem Rohrsensor 31, quer zur Förderrichtung des Schweißdrahtes 13, d.h., dass der Sensor, insbesondere der Rohrsensor 31, den Schweißdraht 13 umschließt, sodass der Schweißdraht 13 durch den Sensor geführt wird. Der Schweißdraht 13 verläuft bei optimaler Förderkraft im Mittel des Rohrsensors 31. Dieser weist einen Innendurchmesser 38 auf, der größer ist als der Außendurchmesser des Schweißdrahtes 13, sodass sich der Schweißdraht 13 im Bereich des Rohrsensors 31 frei bewegen kann. Damit wird erreicht, dass bei zu hoher Förderkraft sich der Schweißdraht 13 in diesem Bereich Auslenken kann, d.h., dass bei Übersteigen einer Eigensteifigkeit des Schweißdrahtes 13 dieser versucht, den auf ihn einwirkenden Druck auszuweichen, wodurch ein Ausweichen oder Auslenken des Schweißdrahtes 13 in einem für den Schweißdraht 13 möglichen Bereich im Sensor, insbesondere im Rohrsensor 31, wo dieser nicht geführt wird, entsteht bzw. verursacht wird.

Von dem Sensor, insbesondere dem Rohrsensor 31, wird also das Ausweichen bzw. Auslenken des im Mittel bzw. in einer Mittellage des Rohrsensors verlaufenden Schweißdrahtes 13 aufgrund der auftretenden Förderkraft bzw. der Druckkraft auf den Schweißdraht 13 ermittelt, wobei der Schweißdraht 13 bei einer optimalen Förderkraft bzw. einer optimalen Druckkraft des Hilfsantriebes 30 in Richtung des Hauptantriebes 29 im Sensor, insbesondere im Rohrsensors 31, im Mittel bzw. in der Mittellage verläuft und bei einem weiteren Erhöhen der Förderkraft aus dem Mittel, insbesondere aus der Mittellage, gedrückt wird, wie dies in Fig. 3 dargestellt ist.

Dieses Ausweichen bzw. Auslenken des Schweißdrahtes 13 wird von der Drehzahlreglereinheit 40 verursacht, da die Drehzahl bzw. eine Drahtvorschubgeschwindigkeit des Hilfsantriebes 30 höher ist als die Drehzahl bzw. die Drahtvorschubgeschwindigkeit des Hauptantriebes 29 am Schweißbrenner 10. Zur Verringerung bzw. Begrenzung der Förderkraft bzw. der Druckkraft auf den Schweißdraht 13 wird von der Drehzahlreglereinheit 40 die Drehzahl einer der beiden Schweißdrahtfördervorrichtungen 27, 28, insbesondere des Hauptantriebes 29, konstant gehalten, wogegen die Drehzahl der anderen Schweißdrahtfördervorrichtung 27, 28, insbesondere des Hilfsantriebes 30, geregelt bzw. verringert wird, d.h., dass durch Verringerung der Drehzahl, insbesondere der Drahtvorschubgeschwindigkeit, des Hilfsantriebes 30 die Förderkraft bzw. die Druckkraft auf den Schweißdraht 13 verringert wird, da der Hauptantrieb 29 den Schweißdraht 13 weiter konstant in Richtung des Schweißbrenners 10 fördert und vom Hilfsantrieb 30 weniger Schweißdraht 13 vom Drahtvorrat 14 nachgefördert wird. Dadurch hebt sich das Ausweichen bzw. die Auslenkung des Schweißdrahtes 13 im Rohrsensor 31 wieder auf. D.h. also, dass die Drehzahlreglereinheit 40 bei Erhalt eines Signals von der Detektoreinheit 39 die Drehzahl des Hilfsantriebes 30, insbesondere jener Schweißdrahtfördervorrichtung 27, 28 die dem Drahtvorrat 14 zugeordnet ist, verringert oder die Drehzahl des Hauptantriebes 29 erhöht. Dadurch wird erreicht, dass die Drehzahlreglereinheit 40 bei Erhalt eines Signals von der Detektoreinheit 39 die Schweißdrahtfördervorrichtungen 27, 28 derart regelt, dass die Förderkraft bzw. die Druckkraft auf den Schweißdraht 13 verringert bzw. begrenzt wird und somit das Ausweichen bzw. die Auslenkung des Schweißdrahtes 13 im Rohrsensor 31 aufgehoben wird.

Von der Detektoreinheit 39 wird ein Signal an die Drehzahlreglereinheit 40 übersandt, wenn der Schweißdraht 13 im Inneren des Sensors, insbesondere des Rohrsensors 31, derartig ausgelenkt wird, dass dieser das Gehäuse 35 des Sensors, insbesondere des Rohrsensors 31, berührt und somit ein Kurzschluss zwischen der auf den Schweißdraht 13 einwirkenden Schweißdrahtfördervorrichtung 27, insbesondere dem Antriebselement 34, und dem Gehäuse 35 des Sensors, insbesondere des Rohrsensors 31, durch den Schweißdraht 13 erzeugt wird, sodass die Drehzahlreglereinheit 40 mit der Verringerung bzw. Begrenzung der Förderkraft beginnen kann. Die Regelung des Hilfsantriebes 30 kann mit allen aus dem Stand der Technik bekannten Verfahren durchgeführt werden.

Dabei ist es beispielsweise möglich, dass die Drehzahlregelung von der Drehzahlreglereinheit 40 für den Hilfsantrieb 30 so lange erfolgt, bis von der Detektoreinheit 39 kein Signal mehr übersandt wird, also der Kurzschluss aufgehoben ist, oder die Regelung in Abhängigkeit einer voreinstellbaren Zeitdauer erfolgt, d.h., dass die Drehzahl über einen vorgegebenen und gespeicherten Kurvenverlauf über eine bestimmte Zeitdauer verändert wird. Nachdem entsprechend dem verwendeten Regelverfahren die Begrenzung bzw. Kompensation der Förderkraft im Schweißdraht 13 aufgehoben wurde, wird von der Drehzahlreglereinheit 40 die Drehzahl bzw. die Drahtvorschubgeschwindigkeit des Hilfsantriebes 30 wieder geringfügig erhöht, sodass bei neuerlichem Auftreten eines Kurzschlusses eine weitere Regelung durchgeführt wird. Durch ein derartiges Vorgehen wird erreicht, dass sich für die unterschiedlichsten Schweißdrähte 13 eine optimale Förderkraft einstellt, da die anschließende Erhöhung der Drehzahl für den Hilfsantrieb 30 nicht mehr auf die ursprüngliche, nach dem Start des Schweißprozesses vorhandene Drehzahl geregelt wird, sondern diese gegenüber der Drehzahl, die gerade bei der Aufhebung des Kurzschlusses verwendet wurde, geringfügig entsprechend eines vorgegebenen bzw. voreingestellten Wertes erhöht wird.

Weiters ist es durch eine derartige Erfassung des Förderdruckes auch möglich, dass aufgrund der Dimensionierung des Sensors, insbesondere des Gehäuses 35 des Rohrsensors 31, eine entsprechende Förderkraft eingestellt bzw. zugelassen werden kann, da der Schweißdraht 13 entsprechend weit ausgelenkt werden muss, um den gewünschten Kurzschluss herzustellen.

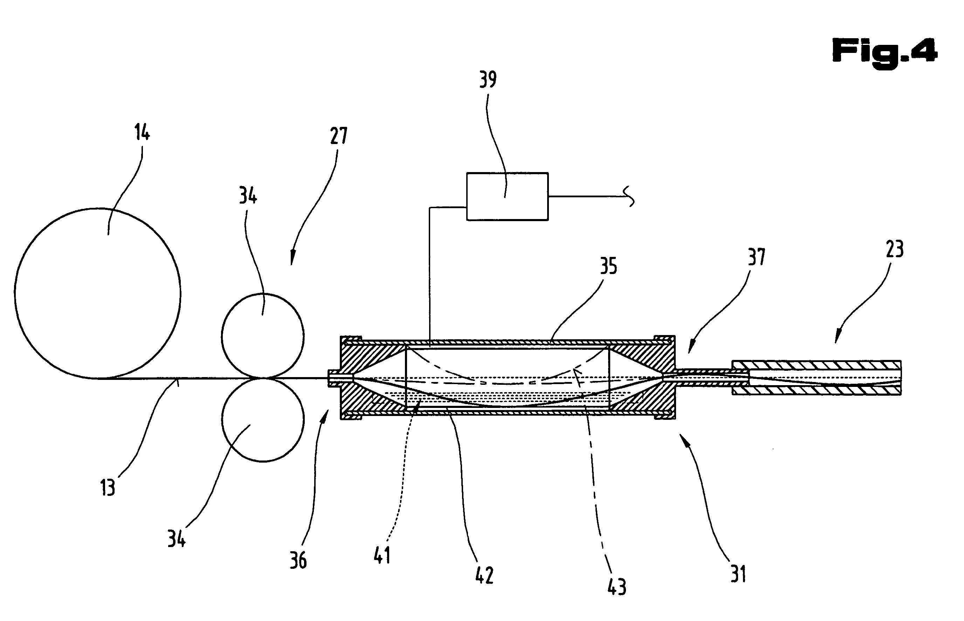

In Fig. 4 ist ein weiteres Beispiel für den Sensor, insbesondere den Rohrsensor 31, dargestellt, wobei das Funktionsprinzip den zuvor beschriebenen Figuren entspricht.

Dabei ist der Rohrsensor 31 nunmehr derartig ausgebildet, dass im Innenraum des Gehäuses 35 Elemente angeordnet sind, mit denen die Auslenkung bzw. die Förderkraft auf den Schweißdraht 13 erfasst werden kann. Dabei ist es beispielsweise möglich, dass im Inneren, insbesondere im Innenraum, des Sensors, insbesondere des Rohrsensors 31, zumindest eine Lichtschranke 41, wie mit strichlierten Linien eingezeichnet, angeordnet wird, wobei über diese die Ablenkung des Schweißdrahtes 13 von der Mittellage des Sensors, insbesondere des Rohrsensors 31, ermittelt wird, d.h., dass durch Anordnung zumindest eines lichtaussendenden Elementes und eines lichtempfindlichen Elementes die Lichtschranke 41 aufgebaut werden kann und somit bei einer Auslenkung des Schweißdrahtes 13 aufgrund einer zu hohen Förderkraft diese Lichtschranke 41 unterbrochen wird, sodass ein Signal von der Detektoreinheit 39 an die Drehzahlreglereinheit 40 für die Ansteuerung der Schweißdrahtfördervorrichtungen 27, 28 gesandt wird.

Bei dem dargestellten Beispiel ist die Detektoreinheit 39 mit den Elementen des Rohrsensors 31 verbunden, welche bei Aktivierung ein Signal bilden, sodass die weitere Verbindung des Rohrsensors 31 mit dem Hilfsantrieb 30 entfallen kann. Bei einer Ausbildung mit Lichtschranken 41 im Gehäuse 35 des Sensors ist es möglich, mehrere derartige Lichtschranken anzuordnen, sodass das Auslenken des Schweißdrahtes 13 über einen größeren Bereich überwacht werden kann.

Weiters ist es möglich, dass anstelle oder zusätzlich zu den Lichtschranken 41 im Inneren, insbesondere im Innenraum, des Sensors, insbesondere des Rohrsensors 31, zumindest ein Druckelement 42 angeordnet wird, welches bei Berührung ein zu einer Berührungskraft proportionales elektrisches Signal abgibt und somit wiederum die Auslenkung des Schweißdrahtes 13 erfasst werden kann.

Durch diese Art der Erfassung der Auslenkung ist es nicht erforderlich, dass das Gehäuse 35 des Sensors rohrförmig ausgebildet wird. Damit jedoch sichergestellt ist, dass der Schweißdraht 13 bei Übersteigen der Förderkraft bzw. der Druckkraft in eine bestimmte Richtung, in der die Elemente, wie der Lichtschranken 41 und/oder die Druckelemente 42, angeordnet sind, ausgelenkt wird, wird bevorzugt im Innenraum des Gehäuses 35 eine Ablenkvorrichtung 43, wie schematisch mit strichpunktierten Linien eingezeichnet, angeordnet. Die Ablenkvorrichtung 43 hat die Aufgabe, den Schweißdraht 13 bereits bei optimaler Förderkraft aus der Mittellage, strichliert angedeutet, des Gehäuses 35 zu drucken, sodass eine Richtungsvorgabe für die Auslenkung des Schweißdrahtes 13 erreicht wird. Dabei ist es selbstverständlich möglich, dass dazu kein geschlossenes Gehäuse 35 mehr notwendig ist, sondern dass der Schweißdraht 13 ebenso frei verlaufend über die Ablenkvorrichtung 43 geführt werden kann und an der gegenüberliegenden Seite die Elemente angeordnet werden.

Weiters ist in dem dargestellten Beispiel der Fig. 4 eine besondere Ausbildung der Drahteinlaufführung 36 und der Drahtauslaufführung 37 dargestellt. Diese weisen dabei einen sich erweiternden Verlauf in Richtung des Innenraumes des Gehäuses 35 des Sensors auf, sodass beim Drahteinfädeln der Schweißdraht 13 derart abgelenkt wird, dass dieser ohne zusätzliche Hilfsmittel durch den Sensor geführt werden kann.

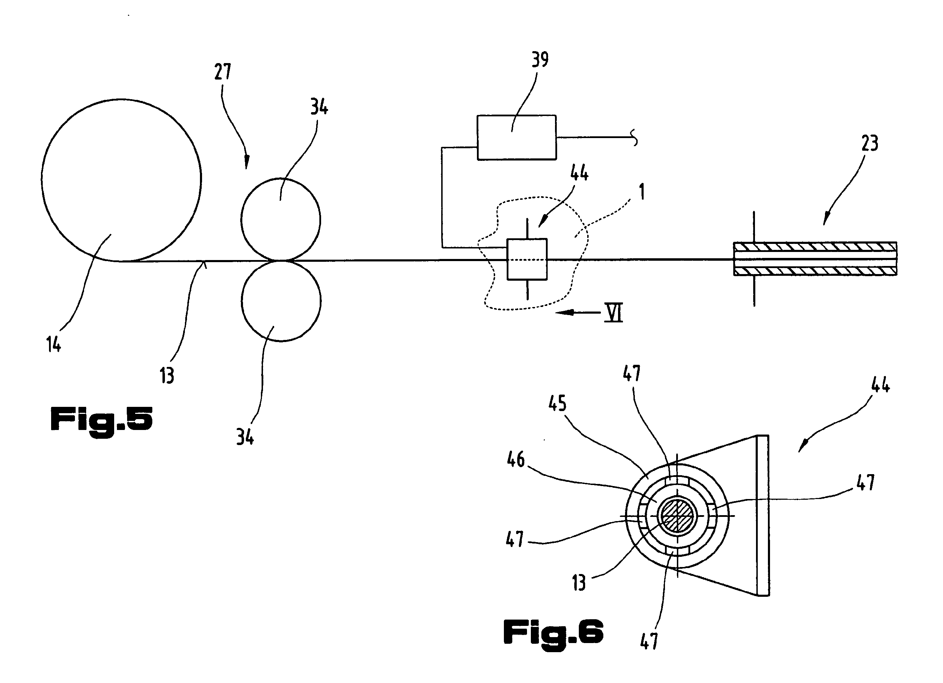

In den Fig. 5 und 6 ist ein anderes Beispiel für die Erfassung bzw. Ermittlung der Auslenkung des Schweißdrahtes 13 dargestellt. Dabei wird der Sensor nunmehr durch einen Drucksensor 44, welcher am Gehäuse des Schweißgerätes 1 befestigt ist, gebildet, wobei der Schweißdraht 13 wiederum durch den Drucksensor 44 geführt wird. Der Drucksensor 44 ist derartig aufgebaut, dass dieser aus einem äußeren und einem inneren Ring 45, 46 mit dazwischen liegenden Druckelementen 47 besteht, wobei nunmehr der Innendurchmesser des inneren Ringes 46 nur unwesentlich größer als der Außendurchmesser des Schweißdrahtes 13 ist bzw. beim Einsatz einer Seele für die Führung des Schweißdrahtes 13 der Innendurchmesser des Ringes 46 geringfügig größer ist als der Außendurchmesser der Seele.

Die Verwendung einer Seele für die Führung des Schweißdrahtes 13 im Bereich des Sensors ist in allen Ausführungsbeispielen der Fig. 4 bis 6 möglich, bei denen keine Kurzschlussbildung zwischen dem Schweißdraht 13 und dem Gehäuse 35 des Sensors notwendig ist.

Durch einen derartigen Aufbau des Sensors, insbesondere des Drucksensors 44, wird erreicht, dass ein teilweises oder ansatzweises Auslenken des Schweißdrahtes 13 aus seiner Normallage an zumindest einer Detektorstelle im Bereich zwischen den Schweißdrahtfördervorrichtungen 27, 28 durch den Sensor, insbesondere den Drucksensor 44, erfasst wird.

Dabei kann jedoch der Schweißdraht 13 aufgrund der engen Führung im Drucksensor nicht aus seiner Förderlage abweichen, sodass nur ein ansatzweises Auslenken erfasst bzw. festgestellt werden kann. Diese hat den Vorteil, dass es dabei zu keinen Verletzungen bzw. Knickungen der Oberfläche des Schweißdrahtes 13 kommen kann.

Die spezielle Ausbildung des Drucksensors 44, der um den Schweißdraht 13 geführt bzw. umgreifend angeordnet ist, hat den Vorteil, dass der Schweißdraht 13 im Drucksensor 44 eine beliebige Richtung auslenken kann, aber nur eine geringe Anzahl von Druckelementen 47 notwendig ist, da durch den inneren Ring 46 die entstehenden Druckkräfte durch den Schweißdraht 13 auf die vorhandenen Druckelemente 47 aufgeteilt werden. Ein weiterer Vorteil eines derartigen Drucksensors 44 liegt darin, dass eine ständige bzw. kontinuierliche Überwachung des Schweißdrahtes 13 durchgeführt werden kann, da die Verstellwege bzw. Abweichwege des Schweißdrahtes 13 minimal sind und somit der Schweißdraht 13 mit einer maximalen Förderkraft gefördert werden kann.

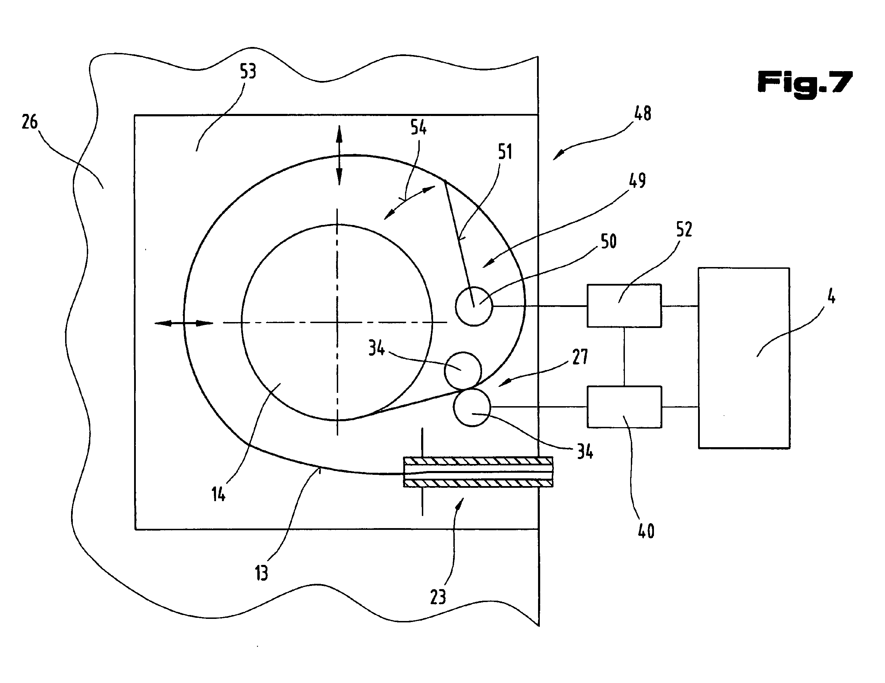

In Fig. 7 ist ein Beispiel für eine erfindungsgemäße Vorrichtung zum Fördern von Schweißdraht 13 von einem Drahtvorrat 14 zu einem Schweißbrenner 10 (siehe Fig. 1 oder 2) gezeigt, wobei zumindest dem Drahtvorrat 14 eine Schweißdrahtfördervorrichtung 27 zugeordnet ist.

Die Drahtförderung von dem Drahtvorrat 14 zu dem Schweißbrenner 10 (siehe Fig. 1 oder 2) erfolgt über das Schlauchpaket 23 oder einer Führungsvorrichtung, insbesondere einer in dem Schlauchpaket 23 oder der Führungsvorrichtung angeordneten Seele. Vor dem Eintritt des Schweißdrahtes 13 in das Schlauchpaket 23 oder in die Führungsvorrichtung ist eine Drahtspeichereinheit 48, in der der Schweißdraht 13 schlaufenförmig verläuft, angeordnet, wobei dem Schweißdraht 13 in der Drahtspeichereinheit 48 ein Erfassungsmittel 49, insbesondere ein Sensor, zur Erfassung des Krümmungsverhaltens des Schweißdrahtes 13 zugeordnet ist.

Das Erfassungsmittel 49 kann durch einen Winkelsensor oder einen Drehwiderstand 50 gebildet sein, wobei das Erfassungsmittel 49 über einen starr mit diesem befestigten Hebel 51 mit dem Schweißdraht 13 in der Drahtspeichereinheit 48 verbunden ist, sodass das Erfassungsmittel 49 zur Überwachung des schlaufenförmigen Verlaufes des Schweißdrahtes 13 um den Drahtvorrat 14 ausgebildet ist. Weiters ist das Erfassungsmittel 49 mit einer Reglereinheit 52 für die Schweißdrahtfördervorrichtung 27 zur Weitergabe von Information für die Regelung zumindest einer Schweißdrahtfördervorrichtung 27 verbunden. Diese Reglereinheit 52 übersendet an die Drehzahlreglereinheit 40 für den Antriebsmotor - nicht dargestellt - und bevorzugt an die Steuervorrichtung 4 des Schweißgerätes 1 ein entsprechendes Signal, sodass in Abhängigkeit des Signals von der Reglereinheit 52 die Drehzahl bzw. die Fördergeschwindigkeit von der Drehzahlreglereinheit 40 erhöht oder verringert wird. Der Aufbau des Schweißgerätes 1 kann wie in den zuvor beschriebenen Fig. 1 bis 6 erfolgen, sodass dem Schweißbrenner 10 und dem Drahtvorrat 14 jeweils eine Schweißdrahtfördervorrichtung 27, 28, insbesondere ein Hauptantrieb 29 und ein Hilfsantrieb 30, zugeordnet ist, wobei der Übersicht halber nur der Drahtvorrat 14 mit der Drahtspeichereinheit 48 und der zugeordneten Schweißdrahtfördervorrichtung 27 dargestellt ist. Selbstverständlich ist es möglich, dass ein Aufbau mit nur einer Schweißdrahtfördervorrichtung 27 oder 28 erfolgen kann.

Damit mit dem Erfassungsmittel 49 die schlaufenförmige Führung des Schweißdrahtes 13 erfasst bzw. überwacht werden kann, ist der Hebel 51 des Erfassungsmittels 49 beweglich mit dem Schweißdraht 13 verbunden, sodass bei einer Veränderung der Schlaufenausbildung des Schweißdrahtes 13 dieser Hebel 51 durch den Schweißdraht 13 bewegt werden kann. Dabei ist das Erfassungsmittel 49, insbesondere der Winkelsensor oder der Drehwiderstand 50, mit dem Hebel 51, bevorzugt innerhalb des schlaufenförmigen Verlaufes des Schweißdrahtes 13, angeordnet. Damit der Schweißdraht 13 schlaufenförmig in der Drahtspeichereinheit 48 geführt werden kann, ist es möglich, dass mehrere frei bewegliche Lagerstellen bzw. Führungselemente angeordnet werden. Bei dem gezeigten Ausführungsbeispiel wird der Schweißdraht 13 in einer Seele, insbesondere in einer Kunststoffseele, geführt, sodass eine entsprechende Eigensteifigkeit erreicht wird und durch entsprechende Befestigung der Seele diese eine schlaufenförmige Ausbildung annimmt.

Dabei ist zu erwähnen, dass die Drahtspeichereinheit 48 durch einen Gehäusekasten 53 des Gehäuses 26 des Schweißgerätes 1 ausgebildet ist, wie dies schematisch angedeutet ist. In der Drahtspeichereinheit 48 bzw. dem Gehäusekasten 53 des Schweißgerätes 1 ist der Drahtvorrat 14, die Schweißdrahtfördervorrichtung 27, insbesondere dessen Antriebselemente 34, sowie das Erfassungsmittel 49 angeordnet, wobei die Befestigung bzw. Lagerung der einzelnen Elemente an einer Rückwand des Gehäusekastens 53, insbesondere an dem Gehäuse 26 des Schweißgerätes 1, erfolgt und bei einem Betrieb des Schweißgerätes 1 dieser Gehäusekasten 53 mit einem Deckel bzw. einem Seitenteil des Gehäuses 26, wie dies bereits für die Lagerung bzw. Anordnung des Drahtvorrates 14 in dem Schweißgerät 1 aus dem Stand der Technik bekannt ist, verschlossen wird.

Wird von dem Benutzer ein Schweißprozess gestartet, so wird von der Drehzahlreglereinheit 40 die Schweißdrahtfördervorrichtung 27 auf eine voreingestellte Schweißdrahtfördergeschwindigkeit geregelt, wobei die Schweißdrahtfördervorrichtung 27 den Schweißdraht 13 von dem Drahtvorrat 14 von einer bevorzugt runden Drahtrolle fördert. Der Schweißdraht 13 führt vor Eintritt in das Schlauchpaket 23, welches schematisch dargestellt ist, oder einer Führungsvorrichtung einen schlaufenförmigen, frei beweglichen Umlauf um den Drahtvorrat 14 durch, d.h., dass der Schweißdraht 13 durch die Schweißdrahtfördervorrichtung 27 in Richtung des Schweißbrenners 10 (siehe Fig.1 oder 2) transportiert wird, wobei dieser nach der Schweißdrahtfördervorrichtung 27 einen schlaufenförmigen bzw. kreisförmigen Umlauf um die Drahtrolle bzw. dem Drahtvorrat 14 durchführt. Der Drahtvorrat 14 ist drehbar im Zentrum des schlaufenförmigen Verlaufes des Schweißdrahtes 13 in der Drahtspeichereinheit 48 angeordnet.

Durch eine derartige Ausbildung wird erreicht, dass nach der Schweißdrahtfördervorrichtung 27 ein sogenannter Drahtspeicher geschaffen wird, sodass eventuelle Einwirkungen auf das Schlauchpaket 23 bzw. spezielle Drahtförderungen, beispielsweise einer pulsförmigen bzw. einer Vorwärts- und Rückwärts-Förderung des Schweißdrahtes 13 bei einem Schweißprozess, durch diesen Drahtspeicher abgefangen bzw. kompensiert werden.

Dadurch wird erreicht, dass beispielsweise bei einer Bewegung des Schlauchpaketes 23 ein Längenausgleich für den Schweißdraht 13 erzielt wird, ohne dass die Schweißdrahtfördervorrichtung 27 geregelt werden muss, sodass sich Zug- und/oder Druckbewegungen des Schweißdrahtes 13 nicht direkt auf die Antriebselemente 34 der Schweißdrahtfördervorrichtung 27 auswirken und somit die Lebenszeit derartiger Antriebselemente 34 wesentlich erhöht wird. Wird hingegen eine pulsförmige Drahtzuführung des Schweißdrahtes 1 zum Schweißbrenner 10 durchgeführt, so kann mit der Schweißdrahtfördervorrichtung 27 eine konstante Schweißdrahtförderung durchgeführt werden, da die Bewegung des Schweißdrahtes 13, insbesondere ein Stillstand oder eine Rückwärtsbewegung, durch die weitere am Schweißbrenner 10 angeordnete Schweißdrahtfördervorrichtung 28 in der Drahtspeichereinheit 48 ausgeglichen wird und somit eine vereinfachte Steuerung der Schweißdrahtfördervorrichtung 27 erzielt wird.

Die Bewegung des Schweißdrahtes 13 in der Drahtspeichereinheit 48 ist mit einem Pfeil 54 schematisch angedeutet, sodass ersichtlich ist, dass beispielsweise der Schweißdraht 13 bei zu großem Zug bzw. bei zu großer Förderung einer weiteren Schweißdrahtfördervorrichtung 28 sich in Richtung des Drahtvorrates 14 bewegt. Diese Bewegung wird über das Erfassungsmittel 49 erfasst und an die Drehzahlreglereinheit 40 weitergeleitet, worauf nach dem Unterschreiten eines Sollwertes für die Veränderung des Schweißdrahtes 13 in der Drahtspeichereinheit 48 nunmehr von der Drehzahlreglereinheit 40 die Fördergeschwindigkeit erhöht wird und somit diese Bewegung ausgeglichen werden kann. Bei einer zu großen Fördergeschwindigkeit des Schweißdrahtes 13 durch die Schweißdrahtfördervorrichtung 27 bzw. bei einer Rückwärtsbewegung oder Rückwärtsförderung des Schweißdrahtes 13 durch die weitere Schweißdrahtfördervorrichtung 28 wird eine Vergrößerung des Schlaufendurchmessers des Schweißdrahtes 13 in der Drahtspeichereinheit 48 hervorgerufen, bis nach Überschreiten eines weiteren Sollwertes durch Verringerung der Fördergeschwindigkeit der Schweißdrahtfördervorrichtung 27 der Schlaufendurchmesser wieder reduziert wird.

Durch diese Verwendung der Drahtspeicherung wird in vorteilhafter Weise erreicht, dass sich Änderungen in der Schweißdrahtförderung nicht direkt auf die Antriebselemente 34 der Schweißdrahtfördervorrichtung 27 auswirken und gleichzeitig bei einer Rückwärtsbewegung des Schweißdrahtes 13 der sich entgegenstellende Widerstand sehr stark reduziert wird, d.h., dass bei einer Rückwärtsbewegung des Schweißdrahtes 13 ohne einer derartigen Drahtspeicherung der Schweißdraht 13 vom Schweißbrenner 10 auf die im Schweißgerät 1 angeordnete Schweißdrahtfördervorrichtung 27 gepresst werden müsste bzw. diese Schweißdrahtfördervorrichtung 27 ebenfalls eine Rückwärtsförderung einleiten muss.

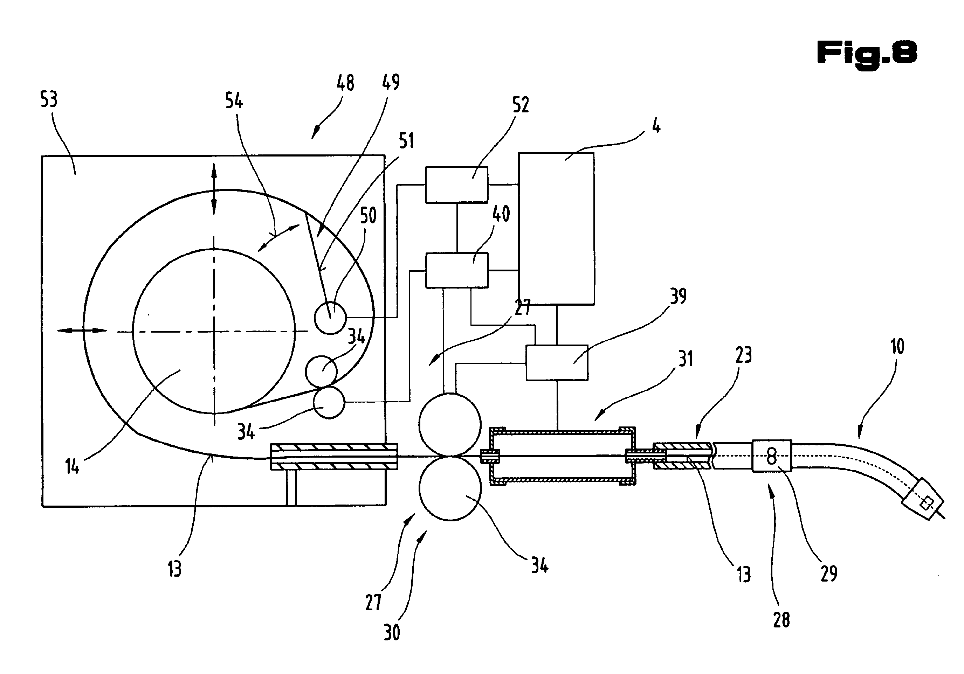

In Fig. 8 ist ein weiteres erfindungsgemäßes Beispiel dargestellt, bei dem ein Drahtfördersystem zum Fördern und Überwachen des Schweißdrahtes 13 von dem Drahtvorrat 14 zum Schweißbrenner 10 gezeigt ist.

Dabei wird bei diesem Drahtfördersystem eine Kombination der zuvor beschriebenen Fig. 1 bis 7 eingesetzt, d.h., dass in einer Schweißanlage die Drahtspeichereinheit 48 und der Sensor, insbesondere der Rohrsensor 31, eingesetzt werden. Bei dem dargestellten Ausführungsbeispiel wird auf die Funktionsbeschreibung verzichtet, da diese aus den zuvor beschriebenen Fig. 1 bis 7 entnommen werden kann. Es wird lediglich erwähnt, dass für die Förderung des Schweißdrahtes 13 von dem Drahtvorrat 14 eine Schweißdrahtfördervorrichtung 27 angeordnet ist und nach dem Austritt aus der Drahtspeichereinheit 48 für die Erfassung der Förderkraft bzw. der Druckkraft des Schweißdrahtes 13 die Schweißdrahtfördervorrichtungen 27 und 28, insbesondere der Hauptantrieb 29 am Schweißbrenner 10 und der Hilfsantrieb 30 im Bereich des Drahtvorrates 14, angeordnet sind, d.h., dass für diesen Aufbau nunmehr drei Schweißdrahtfördervorrichtungen 27, 28 angeordnet sind, die von der Drehzahlreglereinheit 40 unabhängig voneinander angesteuert werden.

Weiters wird erwähnt, dass bei den beschriebenen Ausführungsbeispielen die Detektoreinheit 39 und die Reglereinheit 52 in der Drehzahlreglereinheit 40 integriert werden können bzw. dass die Drehzahlreglereinheit 40 durch die Steuervorrichtung 4 des Schweißgerätes 1 realisiert wird.

Abschließend sei darauf hingewiesen, dass in den zuvor beschriebenen Ausführungsbeispielen die einzelnen Teile bzw. Bauelemente oder Baugruppen schematisch bzw. vereinfacht dargestellt sind.

## Patentansprüche

1. Vorrichtung zum Fördern von Schweißdraht (13) von einem Drahtvorrat (14) zu einem Schweißbrenner (10), wobei eine Schweißdrahtfördervorrichtung (27) und eine weitere Schweißdrahtfördervorrichtung (28) dem Drahtvorrat (14), der durch eine Schweißdrahtrolle gebildet ist, zugeordnet sind, wobei die Drahtförderung von dem Drahtvorrat (14) zu dem Schweißbrenner (10) über ein Schlauchpaket (23) oder eine Führungsvorrichtung, insbesondere eine in dem Schlauchpaket (23) oder der Führungsvorrichtung angeordnete Seele erfolgt und vor dem Eintritt des Schweißdrahtes (13) in das Schlauchpaket (23) oder in die Führungsvorrichtung eine Drahtspeichereinheit (48), in der der Schweißdraht (13) schlaufenförmig verläuft, angeordnet ist, wobei dem Schweißdraht (13) in der Drahtspeichereinheit (48) ein Erfassungsmittel (49), insbesondere ein Sensor, zur Erfassung des Krümmungsverhaltens des Schweißdrahtes (13) zugeordnet ist und dieses Erfassungsmittel (49) mit einer Reglereinheit (52) für die Schweißdrahtfördervorrichtung (27) und die weitere Schweißdrahtfördervorrichtung (28) verbunden ist, wobei der Drahtvorrat (14) drehbar im Zentrum des schlaufenförmigen Umlaufes des Schweißdrahtes (13) in der Drahtspeichereinheit (48) angeordnet ist, **dadurch gekennzeichnet, dass** das Erfassungsmittel (49) durch einen Winkelsensor oder einen Drehwiderstand (50) gebildet ist, wobei das Erfassungsmittel (49) über einen starr an diesem befestigten Hebel (51) am Schweißdraht (13) in der Drahtspeichereinheit (48) anliegt.

2. Vorrichtung nach Anspruch 1, **dadurch gekennzeichnet, dass** das Erfassungsmittel (49) zur Weitergabe von Informationen für die Regelung der Schweißdrahtfördervorrichtung (27) ausgebildet ist.

3. Vorrichtung nach Anspruch 1 oder 2, **dadurch gekennzeichnet, dass** dem Schweißbrenner (10) die Schweißdrahtfördervorrichtung (27), insbesondere ein Hauptantrieb (29), und dem Drahtvorrat (14) die weitere Schweißdrahtfördervorrichtung (28), insbesondere ein Hilfsantrieb (30) zugeordnet ist.

4. Vorrichtung nach einem der Ansprüche 1 bis 3, **dadurch gekennzeichnet, dass** der Hebel (51) des Erfassungsmittels (49) beweglich mit dem Schweißdraht (13) verbunden ist.

5. Vorrichtung nach einem der Ansprüche 1 bis 4, **dadurch gekennzeichnet, dass** in einem Drahtvorratsraum, insbesondere in einem Gehäusekasten (53) des Schweißgerätes (1) die Drahtspeichereinheit (48), der Drahtvorrat (14), die Schweißdrahtfördervorrichtung (27), insbesondere dessen Antriebselemente (34), und die weitere Schweißdrahtfördervorrichtung (28) sowie das Erfassungsmittel (49) angeordnet sind.

6. Vorrichtung nach einem der Ansprüche 1 bis 5, **dadurch gekennzeichnet, dass** die Drahtspeichereinheit (48), einen Gehäusekasten (53) aufweist, der zur Bildung eines schlaufenförmigen, frei beweglichen Umlaufes des Schweißdrahtes (13) um den Drahtvorrat (14) ausgeführt ist.

7. Vorrichtung nach einem der Ansprüche 1 bis 6, **dadurch gekennzeichnet, dass** das Erfassungsmittel (49) zur Überwachung des schlaufenförmigen Umlaufes des Schweißdrahtes (13) um den Drahtvorrat (14) ausgebildet ist.

8. Vorrichtung nach einem der Ansprüche 1 bis 7, **dadurch gekennzeichnet, dass** das Erfassungsmittel (49), insbesondere der Winkelsensor oder der Drehwiderstand (50) mit dem Hebel (51), innerhalb des schlaufenförmigen Verlaufes des Schweißdrahtes (13) angeordnet ist.

## Claims

1. Device for feed welding wire (13) from a wire supply (14) to a welding torch (10), with at least one welding wire feeder (27) and another welding wire feeder (28) co-operating with the wire supply (14) which is provided in the form of a welding wire roller, and the wire is fed from the wire supply (14) to the welding torch (10) via a hose pack (23) or a guide mechanism, in particular a core disposed in the hose pack (23) or guide mechanism, and a wire storage unit (48) in which the welding wire (13) runs in a loop arrangement is disposed upstream of where the welding wire (13) enters the hose pack (23) or guide mechanism, and the welding wire (13) in the wire storage unit (48) is provided with a detection means (49), in particular a sensor, for detecting the curvature behaviour of the welding wire (13), and this detection means (49) is connected to an automatic controller unit (52) for the welding wire feeder (27) and the other welding wire feeder (28), and the welding wire (14) is disposed so that it can be rotated at the centre of the loop-shaped circulating path of the welding wire (13) in the wire storage unit (48), **characterised in that** the detection means (49) is provided in the form of an angle sensor or a variable resistor (50), and the detection means (49) lies via a lever (51) rigidly secured to it against the welding wire (13) in the wire storage unit (48).

2. Device as claimed in claim 1, **characterised in that** the detection means (49) is configured to forward information for automatically controlling the welding wire feeder (27).

3. Device as claimed in claim 1 or 2, **characterised in that** the welding wire feeder (27), in particular a main drive (29), co-operates with the welding torch (10), and the other welding wire feeder (28), in particular an auxiliary drive (30), co-operates with the wire supply (14).

4. Device as claimed in one of claims 1 to 3, **characterised in that** the lever (51) of the detection means (49) is displaceably connected to the welding wire (13).

5. Device as claimed in one of claims 1 to 4, **characterised in that** the wire storage unit (48), the wire supply (14), the welding wire feeder (27), in particular its drive elements (34), and the other welding wire feeder (28) as well as the detection means (49) are disposed in a wire supply chamber, in particular a housing box (53) of the welding device (1).

6. Device as claimed in one of claims 1 to 5, **characterised in that** the wire storage unit (48) has a housing box (53), which is designed to produce a loop-shaped, freely displaceable circulating movement of the welding wire (13) around the wire supply (14).

7. Device as claimed in one of claims 1 to 6, **characterised in that** the detection means (49) is designed to monitor the loop-shaped circulating movement of the welding wire (13) around the wire supply (14).

8. Device as claimed in one of claims 1 to 7, **characterised in that** the detection means (49), in particular the angle sensor or variable resistor (50) with the lever (51) is disposed within the loop-shaped path of the welding wire (13).

## Revendications

1. Dispositif d'alimentation en fil de soudage (13) d'une réserve de fil (14) à un chalumeau (10), où un dispositif d'alimentation en fil de soudage (27) et un autre dispositif d'alimentation en fil de soudage (28) sont associés à la réserve de fil (14), qui est formée par un rouleau de fil de soudage, où le convoyage du fil de la réserve de fil (14) au chalumeau (10) a lieu par un paquet tubulaire (23) ou un dispositif de guidage, en particulier une âme disposée dans le paquet tubulaire (23) ou le dispositif de guidage, et avant l'entrée du fil de soudage (13) dans le paquet tubulaire (23) ou dans le dispositif de guidage est disposée une unité de stockage de fil (48) dans laquelle le fil de soudage (13) s'étend en boucle, où est associé au fil de soudage (13) dans l'unité de stockage de fil (48) un moyen de détection (49), en particulier un capteur, pour la détection de la tenue en courbure du fil de soudage (13), et ce moyen de détection (49) est relié à une unité de régulation (52) pour le dispositif d'alimentation en fil de soudage (27) et l'autre dispositif d'alimentation en fil de soudage (28), où la réserve de fil (14) est disposée d'une manière tournante dans le centre de l'extension en boucle du fil de soudage (13) dans l'unité de stockage de fil (48), **caractérisé en ce que** le moyen de détection (49) est formé par un capteur d'angle ou une résistance à la rotation (50), où le moyen de détection (49) s'applique par un levier (51) fixé rigidement à celui-ci au fil de soudage (13) dans l'unité de stockage de fil (48).

2. Dispositif selon la revendication 1, **caractérisé en ce que** le moyen de détection (49) est réalisé pour la transmission d'informations pour la régulation du dispositif d'alimentation en fil de soudage (27).

3. Dispositif selon la revendication 1 ou 2, **caractérisé en ce qu'**il est associé au chalumeau (10) le dispositif d'alimentation en fil de soudage (27), en particulier une commande principale (29), et à la réserve de fil (14) l'autre dispositif d'alimentation en fil de soudage (28), en particulier une commande auxiliaire (30).

4. Dispositif selon l'une des revendications 1 à 3, **caractérisé en ce que** le levier (51) du moyen de détection (49) est relié d'une manière mobile au fil de soudage (13).

5. Dispositif selon l'une des revendications 1 à 4, **caractérisé en ce que** sont disposés dans un espace de réserve de fil, en particulier un caisson de boîtier (53) de l'appareil de soudage (1) l'unité de stockage de fil (48), la réserve de fil (14), le dispositif d'alimentation en fil de soudage (27), en particulier ses éléments d'entraînement (34) et l'autre dispositif d'alimentation en fil de soudage (28) ainsi que le moyen de détection (49).

6. Dispositif selon l'une des revendications 1 à 5, **caractérisé en ce que** l'unité de stockage de fil (48) présente un caisson de boîtier (53) qui, pour la formation d'une extension en forme de boucle, mobile librement, du fil de soudage (13), est réalisé autour de la réserve de fil (14).

7. Dispositif selon l'une des revendications 1 à 6, **caractérisé en ce que** le moyen de détection (49) est réalisé pour la surveillance de l'extension en forme de boucle du fil de soudage (13) autour de la réserve de fil (14).

8. Dispositif selon l'une des revendications 1 à 7, **caractérisé en ce que** le moyen de détection (49), en particulier le capteur d'angle ou la résistance à la rotation (50) avec le levier (51), est disposé à l'intérieur de l'extension en forme de boucle du fil de soudage (13).
